# FASCICULE DE BREVET EUROPEEN

(11) **EP 1 540 019 B1**
(45) Date de publication et mention de la délivrance du brevet: **04.04.2012**
(21) Numéro de dépôt: 03758284.8
(22) Date de dépôt: 27.08.2003
(51) Int. Cl.: A23C 9/142, A23C 9/144, A23C 9/146, A23L 2/74, B01D 61/02, C13K 13/00, C13B 20/16

(54) **PROCEDE DE PURIFICATION PAR NANOFILTRATION D UNE SOLUTION AQUEUSE SUCREE CONTENANT DES ANIONS ET CATIONS MONOVALENTS ET POLYVALENTS**
REINIGUNGSVERFAHREN DURCH NANOFILTRATION EINER SÜSSEN WÄSSRIGEN LÖSUNG, EINWERTIGE UND MEHRWERTIGE ANIONEN UND KATIONEN ENTHALTEND
METHOD FOR PURIFYING BY NANOFILTRATION AN AQUEOUS SUGARY SOLUTION CONTAINING MONOVALENT AND POLYVALENT ANIONS AND CATIONS

(30) Priorité: 06.09.2002 FR 0211042
(43) Date de publication de la demande: 15.06.2005
(73) Titulaire: APPLEXION, 78680 Epone (FR)
(72) Inventeur: THEOLEYRE, Marc-André, F-75020 Paris (FR)
(74) Mandataire: Vieillefosse, Jean-Claude
(86) Numéro de dépôt international: PCT/FR2003/002592
(87) Numéro de publication internationale: WO 2004/022787

(56) Documents cités:
- WO-A-99/04903
- US-A- 2 937 959
- US-A- 5 254 174
- US-A- 5 443 650
- US-A- 5 932 106
- US-B1- 6 383 540
- DATABASE WPI Week 198835 Derwent Publications Ltd., London, GB; AN 1988-245629 XP002244671 & JP 63 177800 A (ITOCHU SEITO KK) 21 juillet 1988 (1988-07-21)

## Description

La présente invention a pour objet un procédé de purification par nanofiltration d'une solution aqueuse contenant un ou plusieurs sucres, des cations polyvalents, des cations métalliques monovalents, des anions monovalents et des anions polyvalents minéraux et/ou des anions d'acides organiques.

La purification par déminéralisation de produits liquides (tels qu'un sirop de glucose, des jus sucrés ou du lactosérum) au moyen de résines échangeuses d'ions est connue depuis de nombreuses année.

Le principe d'une telle déminéralisation est de faire percoler un tel produit liquide à travers une résine cationique et une résine anionique, le contre-ion de la première étant l'ion H⁺ et le contre-ion de la seconde l'ion OH⁻.

En passant sur la résine cationique, les cations du produit liquide sont échangés avec les ions H⁺ de la résine et en passant sur la résine anionique, les anions du produit sont échangés avec les ions OH⁻ de cette résine, les ions H⁺ et OH⁻ ainsi libérés desdites résines s'associant pour donner de l'eau.

La régénération des résines ainsi utilisées est réalisée par passage d'un acide sur la résine cationique et d'une base sur la résine anionique et selon les rendements de régénération, les effluents de régénération peuvent contenir jusqu'à 2 à 3 fois la charge minérale extraite du produit liquide traité.

De tels effluents fortement salins constituent indiscutablement une source de nuisance.

En résumé, la déminéralisation de liquides contenant des minéraux au moyen de résines échangeuses d'ions impose l'utilisation d'un acide et d'une base pour leur régénération. Outre le coût de ces produits chimiques, cette opération de déminéralisation produit des affluents salins polluants et dont le traitement est onéreux.

Par ailleurs, la technique de nanofiltration est couramment utiisée comme moyen de pré-concentration de solutions aqueuses contenant des minéraux. Les ions monovalents de ces minéraux traversent la membrane de nanofiltration et se retrouvent donc pour l'essentiel dans le perméat, tandis que leurs ions polyvalents sont retenus par cette membrane et se retrouvent, pour l'essentiel,

Le document US-B-6,383,540 propose un procédé de traitement du lactosérum par déminéralisation, le procédé comprend une étape de séparation des sels par transfert à travers des membranes d'électrodialyse ou de nanofiltration. Le procédé comprend successivement au moins une étape dans laquelle les cations divalents sont échangés pour des protons et au moins une étape dans laquelle les anions divalents sont échangés pour des ions chlorures.

Le document WO-A-99/04903 propose un procédé pour isoler et purifier les nutriments provenant des vapeurs des industries agroalimentaires. Le procédé inclut des étapes de mise en contact d'une solution aqueuse comprenant un nutriment et des ions divalents avec une résine échangeuse d'ions comprenant des ions monovalents. L'éluant dépourvu d'ions divalents est collecté et soumis à un procédé permettant de séparer les ions monovalents des nutriments. concentrés dans le rétentat ; on obtient ainsi un effet de purification par déminéralisation qui reste cependant insuffisant.

Le but de la présente invention est la mise au point d'un procédé de purification économe en énergie et en produits chimiques et limitant la quantité et le nombre d'effluents produits.

L'idée à la base de ce procédé réside dans la modification de la composition ionique, sans déminéralisation, de la solution aqueuse à traiter afin d'améliorer l'effet de déminéralisation d'une nanofiltration mise en oeuvre sur la solution aqueuse ainsi modifiée.

Ainsi, la présente invention concerne un procédé selon la présente revendication 1. Il est également décrit un procédé de purification d'une solution aqueuse contenant un ou plusieurs sucres, des cations polyvalents, des cations métalliques monovalents, des anions monovalents et des anions polyvalents minéraux et/ou des anions d'acides organiques, tels que lactate et citrate, caractérisé en ce qu'il comprend les opérations :
(a) de substitution d'une partie au moins desdits cations polyvalents et/ou desdits anions polyvalents minéraux et anions d'acides organiques respectivement par des cations métalliques monovalents et/ou des anions monovalents pour obtenir une solution aqueuse appauvrie en cations polyvalents et/ou en anions polyvalents minéraux et anions d'acides organiques et contenant lesdits cations métalliques monovalents et/ou lesdits anions monovalents,
(b) de nanofiltration de la solution résultant de l'opération (a) pour obtenir en tant que rétentat, un jus sucré aqueux enrichi en sucres, en cations polyvalents et en anions polyvalents minéraux et/ou anions d'acides organiques et en tant que perméat, un effluent aqueux contenant l'essentiel des anions et cations métalliques monovalents,
(c) déminéralisation complémentaire d'une partie au moins du rétentat obtenu par l'opération (b), avec une résine échangeuse de cations dont le contre-ion est H⁺ et une résine échangeuse d'anions dont le contre-ion est OH⁻, ces résines se chargeant ainsi respectivement en cations et anions résiduels du rétentat, et
(d) régénération d'une part, de ladite résine échangeuse de cations au moyen d'un acide minéral dont l'anion est de même nature que les anions monovalents présents dans la solution aqueuse de départ et d'autre part, de ladite résine échangeuse d'anions au moyen d'une base minérale dont le cation est de même nature que les cations métalliques monovalents présents dans la solution aqueuse de départ, ce qui produit des résines échangeuses régénérées et deux effluents de régénération contenant de manière prépondérante des anions et cations métalliques monovalents.

L'opération (a) ci-dessus livre une solution aqueuse enrichie en anions et/ou en cations métalliques monovalents et fortement appauvrie en cations polyvalents et en anions polyvalents minéraux et/ou anions d'acides organiques.

Au cours de l'opération (b), les sucres de la solution aqueuse issue de l'opération (a) se retrouvent dans le rétentat dans lequel se retrouvent également principalement les cations polyvalents et les anions polyvalents minéraux et/ou les anions d'acides organiques, restants. Quant aux ions monovalents, ils se retrouvent pour l'essentiel dans le perméat.

Il est à noter que grâce à l'opération (a) préalable, qui ne constitue pas en soi une opération de déminéralisation, on augmente dans la solution aqueuse la proportion des ions monovalents par rapport aux ions polyvalents et anions d'acides organiques ce qui entraîne une augmentation du taux de déminéralisation de ladite solution aqueuse au cours de l'opération (b).

Lorsque l'on cherche à éliminer de préférence les cations polyvalents présents dans la solution aqueuse à purifier, dans l'opération (a) la substitution des cations polyvalents est avantageusement effectuée simultanément à la substitution des anions polyvalents minéraux et/ou anions d'acides organiques ou encore plus avantageusement effectuée sur la solution aqueuse ayant préalablement subi la substitution des anions polyvalents minéraux et/ou anions d'acides organiques.

Par ailleurs, lorsque l'on cherche à éliminer de préférence les anions polyvalents minéraux et/ou anions d'acides organiques présents dans la solution aqueuse à purifier, dans l'opération (a) la substitution des anions polyvalents minéraux et/ou anions d'acides organiques est avantageusement effectuée simultanément à la substitution des cations polyvalents ou encore plus avantageusement effectuée sur la solution aqueuse ayant préalablement subi la substitution des cations polyvalents.

Selon un mode de réalisation préférée de l'invention, l'opération (a) de substitution comprend le traitement de la solution aqueuse avec une résine cationique dont le contre-ion est un cation métallique monovalent et/ou avec une résine anionique dont le contre-ion est un anion monovalent.

Par ailleurs, le cation métallique monovalent formant le contre-ion de la résine cationique et l'anion monovalent constituant le contre-ion de la résine anionique sont de préférence de même nature que respectivement lesdits cations métalliques monovalents et lesdits anions monovalents présents dans la solution aqueuse de départ; ceci évite l'introduction dans le processus d'ions étrangers et rend plus avantageux, comme on le verra ci-après, les opérations de régénération des résines cationique et anionique susmentionnées.

Selon une caractéristique importante du procédé de la présente invention, ce procédé comprend de préférence également une opération:
(e) de régénération de la résine cationique et/ou anionique, notamment par traitement de celle(s)-ci par du perméat obtenu lors de l'opération (b) de nanofiltration ci-dessus, ce perméat étant préalablement concentré au degré souhaité.

En procédant de la sorte, on fait utilisation, pour la régénération, des ions monovalents initialement présents dans la solution aqueuse à purifier ; ceci évite la mise en oeuvre de produits chimiques coûteux extérieurs au procédé et limite la production d'effluents source de nuisance.

Selon diverses variantes, le procédé selon l'invention peut en outre comprendre une ou plusieurs des opérations suivantes:
(f) chromatographie d'une partie du rétentat résultant de l'opération (b), pour obtenir un effluent enrichi en sucre et un raffinat enrichi en anions et cations métalliques monovalents ;
(g) traitement du perméat résultant de l'opération (b), par osmose inverse ou électrodialyse pour produire de l'eau et une fraction aqueuse enrichie en anions et cations métalliques monovalents.

On notera que selon une autre caractéristique du procédé de la présente invention, la résine cationique et/ou la résine anionique peuvent être régénérées par traitement de celle(s)-ci avec au moins l'un des liquides suivants, éventuellement concentrés, combinés à une partie au moins du perméat obtenu lors de l'opération (b) : effluents obtenus lors de l'opération (d), raffinat obtenu lors de l'opération (f), fraction aqueuse obtenue lors de l'opération (g).

Le procédé selon l'invention peut en particulier être utilisé pour la purification d'un lactosérum, d'un perméat résultant de l'ultrafiltration d'un lactosérum ou d'un jus sucré de betterave, de canne à sucre, de chicorée ou de topinambour, ce lactosérum, perméat ou jus comprenant des ions Ca²⁺ et Mg²⁺, des anions Cl⁻, des cations Na⁺ et K⁺ et des anions choisis essentiellement dans le groupe constitué par les anions phosphate et sulfate, les anions issus d'acides organiques et leurs mélanges.

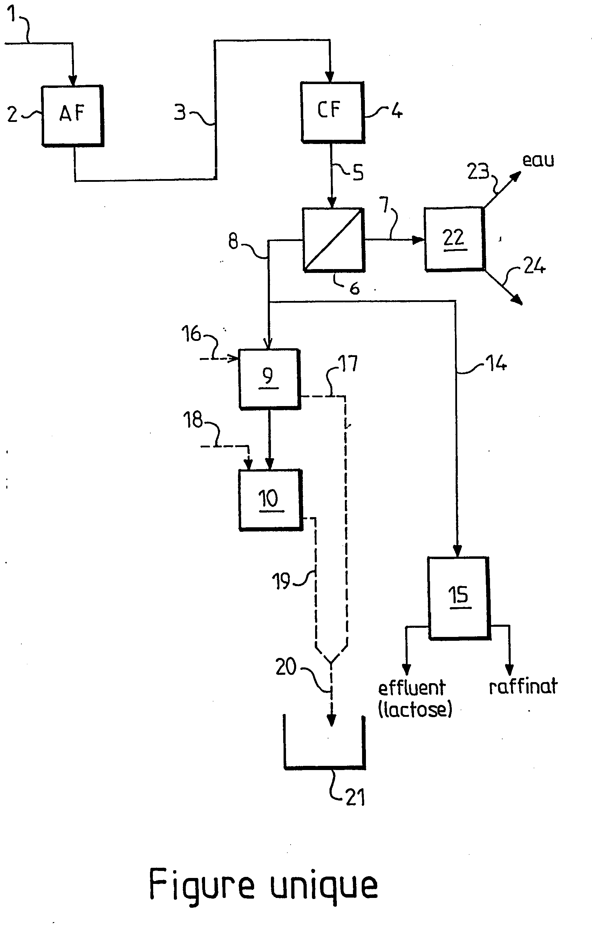

La présente invention est illustrée ci-après, de manière non limitative, par la description d'un exemple de purification, faite en référence à la figure unique qui est la représentation schématique d'une installation pour la mise en oeuvre du procédé selon l'invention.

La solution aqueuse soumise à ce procédé est dans l'exemple choisi, un perméat obtenu par ultrafiltration d'un lactosérum. Un tel perméat comprend pour l'essentiel du lactose, des acides organiques et des minéraux (en particulier des cations, Na⁺, K⁺, Ca²⁺, Mg²⁺, des anions Cl⁻ et phosphate et des anions d'acides organiques, tels que citrate et lactate).

Ce perméat est amené par un conduit 1 à l'entrée d'une colonne 2 garnie d'une résine anionique forte (AF), puis de la sortie de cette colonne 2 par un conduit 3 à l'entrée d'une colonne 4 garnie d'une résine cationique forte (CF).

La résine cationique forte est sous la forme Na⁺ ou K⁺, c'est-à-dire que son contre-ion est l'ion Na⁺ ou K⁺ ; la résine anionique forte est sous la forme Cl⁻, c'est-à-dire que son contre-ion est l'ion Cl⁻.

On notera qu'en variante, ces deux résines pourraient être utilisées en mélange, auquel cas une seule colonne serait suffisante.

Lors du passage du perméat sur la résine anionique, il échange ses anions polyvalents minéraux (phosphate) et anions d'acides organiques (lactate, citrate) avec les ions Cl⁻ de la résine ; lors de son passage sur la résine cationique, il échange ses cations polyvalents (Ca²⁺, Mg²⁺) avec les ions Na⁺ ou K⁺ de la résine.

Le perméat se trouve ainsi débarrassé d'une partie substantielle de ses cations et anions polyvalents minéraux et de ses anions d'acides organiques, lesquels cations et anions ont été remplacés par des cations et anions monovalents ; ce perméat contient donc pour l'essentiel du lactose, des ions Na⁺, K⁺ et Cl⁻, des cations Ca²⁺, Mg²⁺ résiduels, des anions phosphate résiduels et des anions d'acides organiques résiduels.

La solution aqueuse issue de la colonne 4 est ensuite amenée par un conduit 5 dans un appareil de nanofiltration 6 comportant une ou des membranes de nanofiltration perméables aux ions monovalents mais retenant le lactose, les ions polyvalents et les ions d'acides organiques.

Ainsi, sont issus de l'appareil 6 :
- d'une part, par le conduit 7 un perméat enrichi en ions Cl⁻, Na⁺ et K⁺, et
- d'autre part, par le conduit 8 un rétentat enrichi en lactose et en anions phosphate, anions issus d'acides organiques et cations Ca²⁺ et Mg²⁺, résiduels ; ce rétentat contient en outre, une faible quantité d'ions Na⁺, K⁺ et Cl⁻.

Par ailleurs, le conduit 8 est raccordé à une unité de déminéralisation du rétentat de la nanofiltration, unité dans laquelle est traitée une partie de ce rétentat.

Cette unité comprend une colonne 9 garnie d'une résine échangeuse de cations dont le contre-ion est H⁺ suivie en série par une colonne 10 garnie d'une résine échangeuse d'anions dont le contre-ion est OH⁻.

Sur la résine échangeuse de cations est retenue une partie substantielle des cations monovalents (Na⁺, K⁺) et des cations polyvalents Ca²⁺ et Mg²⁺ résiduels ; sur la résine échangeuse d'anions est retenue une partie substantielle des anions Cl⁻, des anions phosphate et des anions d'acides organiques (lactate, citrate) résiduels.

A la sortie de la colonne 10, on dispose donc d'une solution aqueuse sucrée pratiquement totalement déminéralisée.

Une partie du rétentat de nanofiltration peut être soumis à une chromatographie. A cet effet, une dérivation 14 est prévue sur le conduit 8, cette dérivation aboutissant à l'entrée d'une colonne de chromatographie 15. On extrait de cette dernière, d'une part un effluent enrichi en lactose et d'autre part un raffinat enrichi en minéraux (essentiellement Na⁺, K⁺ et Cl⁻).

On notera que la résine échangeuse de cations garnissant la colonne 9 peut être régénérée par de l'acide chlorhydrique amené par un conduit 16 en tête de cette colonne 9. Les ions H⁺ de cet acide se substituent aux cations monovalents Na⁺ et K⁺ et cations polyvalents Ca²⁺, Mg²⁺ qui ont été retenus sur cette résine lors du passage sur celle-ci du rétentat de nanofiltration. Il en résulte un premier effluent de régénération extrait par un conduit 17 et contenant des ions H⁺ (HCl en excès), Na⁺, K⁺, Ca²⁺, Mg²⁺ et Cl⁻.

De même, la résine échangeuse d'anions garnissant la colonne 10 peut être régénérée par une solution aqueuse de soude amenée par un conduit 18. Les ions OH⁻ de la soude se substituent aux anions Cl⁻, phosphate, lactate et citrate qui ont été retenus sur cette résine lors du passage sur celle-ci du rétentat de nanofiltration issue de la colonne 9. Il en résulte un deuxième effluent de régénération extrait de la colonne 10 par un conduit 19 et contenant des ions Cl⁻, phosphate, lactate et citrate, Na⁺ et OH- (soude en excès).

Les premier et deuxième effluents de régénération sont ensuite réunis par un conduit 20 et reçus dans un bac 21.

On ajoutera que le perméat de nanofiltration évacué par le conduit 7 peut être traité dans une unité d'osmose inverse 22 pour obtenir d'une part de l'eau extrait par le conduit 23 et d'autre part, une fraction aqueuse (évacuée par le conduit 24) concentrée en ions Na⁺, K⁺ et Cl⁻.

Comme cela ressort de ce qui précède, on dispose de toute une gamme de liquides produits au cours du procédé et avantageusement utilisables, éventuellement après concentration, pour la régénération de la résine cationique forte et la résine anionique forte garnissant les colonnes 2 et 4.

Il s'agit :
- d'une fraction du perméat de nanofiltration évacuée par le conduit 7,
- de la fraction aqueuse saline évacuée de l'unité d'osmose inverse par le conduit 24,
- d'une fraction du rétentat de nanofiltration,
- du raffinat issu de l'unité de chromatographie 15,
- des effluents de régénération reçus dans le bac 21.

On précisera que selon la teneur en cations et anions monovalents Na⁺, K⁺ et Cl⁻ de ces différents liquides utilisables pour la régénération des résines des colonnes 2 et 4, cette régénération pourra être effectuée soit en série, soit en parallèle.

On notera cependant que la régénération en parallèle est particulièrement préférée car elle évite tout risque de précipitation de sels insolubles tels que le phosphate de calcium, sur la résine cationique forte présente dans la colonne 4.

Cependant, la régénération en série des deux résines est possible sous réserve de contrôler le pH pour éviter tout risque de précipitation dans les résines.

Un liquide parfaitement adapté à une régénération en parallèle est constitué par les effluents reçus dans le bac 21 qui sont fortement chargés en ions Na⁺, K⁺ et Cl⁻ provenant pour une partie non négligeable de l'acide chlorhydrique et de la soude utilisés pour la régénération des résines garnissant les colonnes 9 et 10.

Par ailleurs, le tableau ci-après montre l'influence du type de décalcification préalable à la nanofiltration, sur la performance de cette nanofiltration, le liquide traité étant un perméat résultant l'ultrafiltration d'un lactosérum (dénommé perméat de lactosérum dans ce tableau), le facteur de concentration de la nanofiltration étant de 4 et la membrane de nanofiltration étant du type DESAL 5 de la société américaine OSMONICS.

**Tableau**

| | Perméat de lactosérum | Rétentat de nanofiltration | | |
|---|---|---|---|---|
| | | Témoin | CF | AF puis CF |
| matière sèche (g/l) | 50,0 | 187 | 187 | 187 |
| cations totaux (éq./kg de matière sèche) | 1,7 | 1,22 | 1,14 | 0,90 |
| taux de réduction globale des cations (%) | | 28 | 33 | 47 |

| | | | | |
|---|---|---|---|---|
| Témoin : absence totale de décalcification avant la nanofiltration. CF: décalcification par passage sur une résine cationique forte (SR1 LNA de la société américaine Rohm and Haas). AF puis CF: décalcification par passage en série sur une résine anionique forte (IRA 458 de la société américaine Rohm and Haas) puis sur une résine cationique forte. | | | | |

Les données contenues dans ce tableau montre que le taux de réduction globable des cations est augmenté lorsque utilisation est faite du système CF seul et particulièrement augmenté lorsque utilisation est faite du système AF-CF ; ce tableau montre donc la forte influence sur les performances de la nanofiltration d'une réduction préalable de la teneur en cations polyvalents, en anions polyvalents minéraux et en anions d'acides organiques aptes à former des complexes avec lesdits cations polyvalents.

## Revendications

1. Procédé de purification par nanofiltration d'une solution aqueuse contenant un ou plusieurs sucres, des cations polyvalents, des cations métalliques monovalents, des anions monovalents et des anions polyvalents minéraux et/ou des anions d'acides organiques, **caractérisé en ce qu'**il comprend les opérations :
(a) de substitution d'une partie au moins desdits cations polyvalents et desdits anions polyvalents minéraux et anions d'acides organiques respectivement par des cations métalliques monovalents et des anions monovalents, pour obtenir une solution aqueuse appauvrie en cations polyvalents et en anions polyvalents minéraux et anions d'acides organiques et contenant lesdits cations métalliques monovalents et anions monovalents,
(b) de nanofiltration de la solution résultant de l'opération (a) pour obtenir en tant que rétentat, un jus sucré aqueux enrichi en sucres, en cations polyvalents et en anions polyvalents minéraux et/ou en anions d'acides organiques et en tant que perméat, un effluent aqueux enrichi en anions et cations métalliques monovalents.
(c) de déminéralisation complémentaire d'une partie au moins du rétentat obtenu par l'opération (b), avec une résine échangeuse de cations dont le contre-ion est H⁺ et une résine échangeuse d'anions dont le contre-ion est OH⁻, ces résines se chargeant ainsi respectivement en cations et anions résiduels du rétentat, et
(d) de régénération d'une part, de ladite résine échangeuse de cations au moyen d'un acide minéral dont l'anion est de même nature que les anions monovalents présents dans la solution aqueuse de départ et d'autre part, de ladite résine échangeuse d'anions au moyen d'une base minérale dont le cation est de même nature que les cations métalliques monovalents présents dans la solution aqueuse de départ, ce qui produit des résines échangeuses régénérées et deux effluents de régénération contenant de manière prépondérante des anions et cations métalliques monovalents.

2. Procédé selon la revendication 1, **caractérisé en ce que** dans l'opération (a) la substitution des cations polyvalents est effectuée simultanément à la substitution des anions polyvalents minéraux et/ou anions d'acides organiques ou effectuée sur la solution aqueuse ayant subi préalablement la substitution des anions polyvalents minéraux et/ou anions d'acides organiques.

3. Procédé selon la revendication 1, **caractérisé en ce que** dans l'opération (a) la substitution des anions polyvalents minéraux et/ou anions d'acides organiques est effectuée simultanément à la substitution des cations polyvalents ou effectuée sur la solution aqueuse ayant préalablement subi la substitution des cations polyvalents.

4. Procédé selon la revendication 1, 2 ou 3, **caractérisé en ce que** l'opération (a) de substitution comprend le traitement de la solution aqueuse avec une résine cationique dont le contre-ion est un cation métallique monovalent et/ou avec une résine anionique dont le contre-ion est un anion monovalent.

5. Procédé selon la revendication 4, **caractérisé en ce que** le cation métallique monovalent formant le contre-ion de la résine cationique et l'anion monovalent constituant le contre-ion de la résine anionique sont de même nature que respectivement lesdits cations métalliques monovalents et lesdits anions monovalents présents dans la solution aqueuse de départ.

6. Procédé selon la revendication 4 ou 5, **caractérisé en ce qu'**il comprend en outre une opération :
(e) de régénération de la résine cationique et/ou de la résine anionique.

7. Procédé selon la revendication 6, **caractérisé en ce que** l'opération (e) de régénération comprend le traitement de la résine cationique et/ou de la résine anionique avec du perméat obtenu lors de l'opération (b) de nanofiltration, après concentration de celui- ci au degré souhaité.

8. Procédé selon l'une quelconque des revendications 1 à 7, **caractérisé en ce qu'**il comprend en outre l'opération :
(f) de chromatographie d'une partie du rétentat résultant de l'opération (b), pour obtenir un effluent enrichi en sucre et un raffinat enrichi en anions et cations métalliques monovalents.

9. Procédé selon l'une quelconque des revendications 1 à 8, **caractérisé en ce qu'**il comprend en outre l'opération :
(g) de traitement du perméat résultant de l'opération (b), par osmose inverse ou électrodialyse pour produire de l'eau et une fraction aqueuse enrichie en anions et cations métalliques monovalents.

10. Procédé selon l'une quelconque des revendications 6 à 9, **caractérisé en ce qu'**il comprend l'opération :
de régénération de la résine cationique et/ou de la résine anionique par traitement de celle(s)-ci avec au moins l'un des liquides suivants, éventuellement concentrés, combinés à une partie au moins du perméat obtenu lors de l'opération (b) : effluents obtenus lors de l'opération (d), raffinat obtenu lors de l'opération (f), fraction aqueuse obtenue lors de l'opération (g).

11. Utilisation du procédé selon l'une quelconque des revendications précédentes, pour la purification d'un lactosérum, d'un perméat résultant de l'ultrafiltration d'un lactosérum ou d'un jus sucré de betterave, de canne à sucre, de chicorée ou de topinambour, ce lactosérum, perméat ou jus comprenant des ions Ca²⁺ et Mg²⁺, des anions Cl⁻, des cations Na⁺ et K⁺ et des anions choisis essentiellement dans le groupe constitué par les anions phosphate et sulfate, les anions issus d'acides organiques et leurs mélanges.

## Claims

1. Purification method by nanofiltration of an aqueous solution containing one or several sugars, multivalent cations, monovalent metal cations, monovalent anions and multivalent mineral anions and/or organic acid anions, **characterized in that** it comprises the operations:
(a) of replacement of at least a part of said multivalent cations and of said multivalent mineral anions and organic acid anions respectively by monovalent metal cations and monovalent anions, in order to obtain an aqueous solution depleted in multivalent cations and multivalent mineral anions and organic acid anions, and containing said monovalent metal cations and monovalent anions,
(b) of nanofiltration of the solution resulting from operation (a) in order to obtain as a retentate, a sugar aqueous juice enriched in sugars, in multivalent cations and in multivalent mineral anions and/or in organic acid anions, and as a permeate, an aqueous effluent enriched in monovalent anions and monovalent metal cations,
(c) of additional demineralization of at least a part of the retentate obtained by operation (b), with a cation-exchange resin of which the counter-ion is H⁺ and an anion-exchange resin of which the counter-ion is OH⁻, these resins thus charging themselves respectively in residual cations and anions of the retentate, and
(d) of regeneration, on one hand, of said cation-exchange resin by means of a mineral acid of which the anion is of the same type as the monovalent anions present in the initial aqueous solution, and on the other hand, of said anion-exchange resin by means of a mineral base of which the cation is of the same type as the monovalent metal cations present in the initial aqueous solution, which produces regenerated exchange resins and two regeneration effluents mainly containing monovalent anions and monovalent metal cations.

2. Method according to claim 1, **characterized in that** in operation (a), the replacement of the multivalent cations is performed simultaneously to the replacement of the multivalent mineral anions and/or organic acid anions, or performed on the aqueous solution having undergone beforehand the replacement of the multivalent mineral anions and/or organic acid anions.

3. Method according to claim 1, **characterized in that** in operation (a), the replacement of the multivalent mineral anions and/or organic acid anions is performed simultaneously to the replacement of the multivalent cations or performed on the aqueous solution having undergone beforehand the replacement of the multivalent cations.

4. Method according to claim 1, 2 or 3, **characterized in that** replacement operation (a) comprises the processing of the aqueous solution with a cationic resin of which the counter-ion is a monovalent metal cation and/or with an anionic resin of which the counter-ion is a monovalent anion.

5. Method according to claim 4, **characterized in that** the monovalent metal cation forming the counter-ion of the cationic resin and the monovalent anion forming the counter-ion of the anionic resin are of the same type as, respectively, said monovalent metal cations and said monovalent anions present in the initial aqueous solution.

6. Method according to claim 4 or 5, **characterized in that** it further comprises an operation:
(e) of regeneration of the cationic resin and/or of the anionic resin.

7. Method according to claim 6, **characterized in that** regeneration operation (e) comprises the processing of the cationic resin and/or of the anionic resin with a permeate obtained during nanofiltration operation (b), after concentration of it to the desired degree.

8. Method according to one of claims 1 to 7, **characterized in that** it further comprises an operation:
(f) of chromatography of a part of the retentate resulting from operation (b), in order to obtain an effluent enriched in sugar and a raffinate enriched in monovalent anions and monovalent metal cations.

9. Method according to one of claims 1 to 8, **characterized in that** it further comprises an operation:
(g) of processing of the permeate resulting from operation (b), by reverse osmosis or electrodialysis in order to produce water and an aqueous fraction enriched in monovalent anions and monovalent metal cations.

10. Method according to any one of claims 6 to 9, **characterized in that** it comprises the operation:
of regeneration of the cationic resin and/or of the anionic resin by processing the same with at least one of the following liquids, possibly concentrated,
combined to at least a part of the permeate obtained during operation (b): effluents obtained during operation (d), raffinate obtained during operation (f), aqueous fraction obtained during operation (g).

11. Use of the method according to any one of the preceding claims for the purification of a whey, of a permeate resulting from the ultrafiltration of a whey or of a sugar beetroot juice, of a sugarcane juice, of a chicory juice or of a Jerusalem artichoke, this whey, permeate or juice comprising Ca²⁺ and Mg²⁺ ions, Cl⁻ anions, Na⁺ and K⁺ cations and anions selected mainly in the group consisting in the phosphate and sulfate anions, anions from organic acids and their mixtures.

## Patentansprüche

1. Verfahren zur Reinigung durch Nanofiltration einer wässrigen Lösung, welche einen oder mehrere Zucker, mehrwertige Kationen, einwertige Metallkationen, einwertige Anionen und mehrwertige mineralische Anionen und/oder Anionen organischer Säuren enthält, **dadurch gekennzeichnet, dass** es die folgenden Vorgänge umfasst:
(a) der Substitution wenigstens eines Teils der mehrwertigen Kationen und der mehrwertigen mineralischen Anionen und Anionen organischer Säuren durch einwertige Metallkationen bzw. einwertige Anionen, um eine wässrige Lösung zu erhalten, die an mehrwertigen Kationen und an mehrwertigen mineralischen Anionen und Anionen organischer Säuren abgereichert ist und die einwertigen Metallkationen und einwertigen Anionen enthält,
(b) der Nanofiltration der aus dem Vorgang (a) resultierenden Lösung, um als Retentat einen wässrigen Zuckersaft, der mit Zuckern, mit mehrwertigen Kationen und mit mehrwertigen mineralischen Anionen und/oder mit Anionen organischer Säuren angereichert ist, und als Permeat einen wässrigen Abfluss, der mit einwertigen Anionen und Metallkationen angereichert ist, zu erhalten,
(c) der ergänzenden Demineralisierung wenigstens eines Teils des durch den Vorgang (b) erhaltenen Retentats mit einem Kationenaustauschharz, dessen Gegenion H⁺ ist, und einem Anionenaustauschharz, dessen Gegenion OH⁻ ist, wobei sich diese Harze somit mit Restkationen bzw. Restanionen des Retentats aufladen, und
(d) der Regeneration einerseits des Kationenaustauschharzes mittels einer Mineralsäure, deren Anion von derselben Art ist wie die einwertigen Anionen, die in der wässrigen Ausgangslösung vorhanden sind, und andererseits des Anionenaustauschharzes mittels einer Mineralbase, deren Kation von derselben Art ist wie die einwertigen Metallkationen, die in der wässrigen Ausgangslösung vorhanden sind, wodurch regenerierte Austauschharze und zwei Regenerationsabflüsse, die vorwiegend einwertige Anionen und Metallkationen enthalten, erzeugt werden.

2. Verfahren nach Anspruch 1, **dadurch gekennzeichnet, dass** beim Vorgang (a) die Substitution der mehrwertigen Kationen gleichzeitig mit der Substitution der mehrwertigen mineralischen Anionen und/oder Anionen organischer Säuren durchgeführt wird oder in der wässrigen Lösung durchgeführt wird, welche zuvor der Substitution der mehrwertigen mineralischen Anionen und/oder Anionen organischer Säuren unterzogen wurde.

3. Verfahren nach Anspruch 1, **dadurch gekennzeichnet, dass** beim Vorgang (a) die Substitution der mehrwertigen mineralischen Anionen und/oder Anionen organischer Säuren gleichzeitig mit der Substitution der mehrwertigen Kationen durchgeführt wird oder in der wässrigen Lösung durchgeführt wird, welche zuvor der Substitution der mehrwertigen Kationen unterzogen wurde.

4. Verfahren nach Anspruch 1, 2 oder 3, **dadurch gekennzeichnet, dass** der Vorgang (a) der Substitution die Behandlung der wässrigen Lösung mit einem kationischen Harz, dessen Gegenion ein einwertiges Metallkation ist, und/oder mit einem anionischen Harz, dessen Gegenion ein einwertiges Anion ist, umfasst.

5. Verfahren nach Anspruch 4, **dadurch gekennzeichnet, dass** das einwertige Metallkation, welches das Gegenion des kationischen Harzes ist, und das einwertige Anion, welches das Gegenion des anionischen Harzes ist, von derselben Art sind wie die einwertigen Metallkationen bzw. die einwertigen Anionen, die in der wässrigen Ausgangslösung vorhanden sind.

6. Verfahren nach Anspruch 4 oder 5, **dadurch gekennzeichnet, dass** es außerdem einen Vorgang umfasst:
(e) der Regeneration des kationischen Harzes und/oder des anionischen Harzes.

7. Verfahren nach Anspruch 6, **dadurch gekennzeichnet, dass** der Vorgang (e) der Regeneration die Behandlung des kationischen Harzes und/oder des anionischen Harzes mit Permeat umfasst, das beim Vorgang (b) der Nanofiltration gewonnen wurde, nach Konzentrierung desselben bis zu dem gewünschten Grad.

8. Verfahren nach einem der Ansprüche 1 bis 7, **dadurch gekennzeichnet, dass** es außerdem den Vorgang umfasst:
(f) der Chromatographie eines Teils des aus dem Vorgang (b) resultierenden Retentats, um einen mit Zucker angereicherten Abfluss und ein mit einwertigen Anionen und Metallkationen angereichertes Raffinat zu erhalten.

9. Verfahren nach einem der Ansprüche 1 bis 8, **dadurch gekennzeichnet, dass** es außerdem den Vorgang umfasst:
(g) der Behandlung des aus dem Vorgang (b) resultierenden Permeats durch Umkehrosmose oder Elektrodialyse, um Wasser und eine mit einwertigen Anionen und Metallkationen angereicherte wässrige Fraktion zu erzeugen.

10. Verfahren nach einem der Ansprüche 6 bis 9, **dadurch gekennzeichnet, dass** es den Vorgang umfasst:
der Regeneration des kationischen Harzes und/oder des anionischen Harzes durch Behandlung desselben bzw. derselben mit mindestens einer der folgenden, eventuell konzentrierten, mit mindestens einem Teil des bei dem Vorgang (b) erhaltenen Permeats kombinierten Flüssigkeiten: bei dem Vorgang (d) erhaltene Abflüsse, bei dem Vorgang (f) erhaltenes Raffinat, bei dem Vorgang (g) erhaltene wässrige Fraktion.

11. Verwendung des Verfahrens nach einem der vorhergehenden Ansprüche zur Reinigung eines Laktoserums, eines aus der Ultrafiltration eines Laktoserums resultierenden Permeats oder eines Zuckersaftes von Rüben, Zuckerrohr, Chicorée oder Topinambour, wobei dieses Laktoserum, dieses Permeat oder dieser Saft Ca²⁺- und Mg²⁺-Ionen, Cl⁻-Anionen, Na⁺-und K⁺-Kationen und Anionen, die im Wesentlichen aus der Gruppe ausgewählt sind, welche aus den Phosphat-und Sulfat-Anionen und den von organischen Säuren und ihren Mischungen stammenden Anionen besteht, umfasst.
